# EUROPÄISCHE PATENTANMELDUNG

(11) **EP 0 646 654 A1**
(43) Veröffentlichungstag der Anmeldung: **05.04.1995**
(21) Anmeldenummer: 94890157.4
(22) Anmeldetag: 28.09.1994
(51) Int. Cl.: C22B 7/04

(54) **Verfahren und Vorrichtung zur Aufbereitung von Mischungen aus Leichtmetall**

(30) Priorität: 01.10.1993 AT 1973/93
(71) Anmelder: Kos, Bernd, Dipl.-Ing., A-8700 Leoben (AT); MARHOLD, Harald, A-8700 Leoben (AT)
(72) Erfinder: Kos, Bernd, Dipl.-Ing., A-8700 Leoben (AT); MARHOLD, Harald, A-8700 Leoben (AT)
(74) Vertreter: Brauneiss, Leo, Dipl.Ing.

(57) **Zusammenfassung**

Die vorliegende Erfindung befaßt sich mit einem Verfahren zur Aufbereitung von Mischungen aus mindestens einem Leichtmetall und zumindest einer nichtmetallischen Phase, gebildet aus zumindest einem Oxid eines Leichtmetalles, insbesondere von Schlacken und Krätzen für ein anschließendes Verfahren zur Abtrennung der metallischen Phase sowie mit einer Vorrichtung zur Durchführung des Verfahrens bzw. Vorbereitung der Mischung für eine Desintegration. Dabei ist erfindungsgemäß vorgesehen, daß die Mischung, Schlacke oder Krätze und gegebenenfalls Zusätze unter Bildung eines Einsatzes in ein Aufbereitungsgefäß eingebracht, höchstens 380 °C überhitzt und die Phasen durch Bewegung dispergiert und/oder dispergiert gehalten werden, wonach der homogenisierte Einsatz mit den für das Folgeverfahren eingestellten Parametern ausgetragen wird.

## Beschreibung

Die Erfindung betrifft ein Verfahren zur Aufbereitung bzw. Vorbereitung von Mischungen bestehend aus mindestens einem Leichtmetall, insbesondere Aluminium, oder einer Legierung aus diesem(n) Metall(en) und zumindest einer nichtmetallischen Phase, gebildet aus zumindest einem Oxid oder einer Oxidverbindung von diesem(n) Metall(en), gegebenenfalls einem oder mehreren weiteren Stoff(en), zum Beispiel Salz oder Salzmischungen, insbesondere aus bei Verfahren zur Erzeugung, Verarbeitung sowie Rückgewinnung von Aluminium und Aluminiumlegierungen anfallenden Schlacken oder Krätzen bei erhöhter Temperatur für ein anschließendes unabhängiges bzw. separates Verfahren zur Gewinnung bzw. Abtrennung der metallischen Phase von der nichtmetallischen Phase bei gegebenenfalls zumindest teilweiser Separierung der Bestandteile der nichtmetallischen Phase.
Weiters betrifft die Erfindung eine Vorrichtung zur Aufbereitung bzw. Vorbereitung von Mischungen bestehend aus mindestens einem Leichtmetall, insbesondere Aluminium, oder einer Legierung aus diesem(n) Metall(en) und zumindest einer nichtmetallischen Phase, gebildet aus zumindest einem Oxid von diesem(n) Metall(en), gegebenenfalls einem oder mehreren weiteren Stoffen, zum Beispiel Salz oder Salzmischungen, insbesondere aus bei Verfahren zur Erzeugung, Verarbeitung sowie Rückgewinnung von Aluminium und Aluminiumlegierungen anfallenden Schlacken und Krätzen bei erhöhter Temperatur für ein anschließendes Verfahren zur Gewinnung bzw. Abtrennung der metallischen Phase von der nichtmetallischen Phase bei gegebenenfalls zumindest teilweiser Separierung der Bestandteile der nichtmetallischen Phase, umfassend im wesentlichen ein Gefäß mit mindestens einer Öffnung zum Einbringen der Mischung und/oder Schlacke sowie gegebenenfalls Zusatzstoffen und zum Austragen eines gebildeten homogenisierten Einsatzes insbesondere zur Durchführung des Verfahrens. Bei im wesentlichen allen Verfahren zur Gewinnung, Rückgewinnung, Verarbeitung und dgl. von Leichtmetallen, insbesondere Aluminium und Aluminiumlegierungen, entstehen oft in größeren Mengen Abfallmaterialien, wie zum Beispiel Schlacken, Krätzen, Mischungen und dgl., welche neben der nichtmetallischen Phase noch Metall, gegebenenfalls mit hohen Anteilen, enthalten. Leichtmetalle haben einerseits eine hohe Affinität zu Sauerstoff und Stickstoff, bilden also verstärkt hochschmelzende Oxide und Nitride, insbesondere bei der Anwendung von schmelztechnischen und umschmelztechnischen Verfahren an Luft, andererseits ist der Unterschied im spezifischen Gewicht zwischen der Metallphase und der nichtmetallischen Phase bzw. den Reaktionsprodukten gering. In Verbindung mit den Grenzflächenspannungen bewirken obige chemische und physikalische Eigenschaften der Leichtmetalle, daß eine Trennung von nichtmetallischer und metallischer Phase, auch wenn letztere in der Mischung in flüssiger Form vorliegt, schwer und zumeist nicht im erforderlichen Ausmaß durchführbar ist. Eine Rückgewinnung des Metalles bzw. ein Entmetallisieren der Abfallstoffe erscheint jedoch nicht nur wirtschaftlich von hohem Interesse, in steigendem Maße treten zusätzlich auch ökologische Aspekte und eine Erfüllung von immer strenger werdenden Umweltgesetzen in den Vordergrund.
Zur Phasentrennung bzw. Rückgewinnung des Metalles aus Mischungen wie Schlacken und Krätzen wurde bereits eine große Zahl von Verfahren und Einrichtungen vorgeschlagen und beschrieben. Diese beruhen im wesentlichen darauf, daß ein Koagulieren des feinverteilten Metalles bzw. der feinen Tröpfchen im geschmolzenen Zustand zu größeren Aggregaten, die zusammenfließen und ausgetragen werden können, erfolgen soll.
Dazu ist bekannt geworden, durch Rühren der Mischung eine Koagulation der Metallteilchen herbeizuführen. Das Rühren kann dabei durch Rührmittel erfolgen oder in einem drehenden Gefäß durchgeführt werden. Aus der EP-A2-0322207 ist zum Beispiel ein Verfahren bekannt geworden, bei welchem in einem rotierenden Gefäß, in welches Krätze im kalten Zustand eingebracht wurde, mit Plasmabrenner auf eine Temperatur über der Schmelztemperatur des Metalles erhitzt wird. Das dabei agglomerierte Metall muß sodann durch Abstichlöcher in der Trommelwand ausgetragen werden und die im wesentlichen nichtmetallische Phase wird mit einem Werkzeug von der Gefäßwand abgeschabt. In der US-PS 4 997 476 und der GB-A-2 228 014 ist ein weiteres Verfahren mit einem um seine vertikale Achse rotierenden Gefäß beschrieben, welches wiederum durch Plasmabrenner beheizbar ist, wobei nach langen Behandlungszeiten der eingebrachten Krätze ein Auskippen von flüssigem Metall möglich sein soll. Es wurde bespielsweise auch versucht (US-A- 4 575 056), geschmolzenes Aluminium aus heißer Krätze auszupressen. Es sind auch Zentrifugierverfahren mit im wesentlichen kontinuierlicher und diskontinuierlicher Arbeitsweise bekannt geworden. Derartige Zentrifugierverfahren und Vorrichtungen beinhalten jedoch das Problem, daß die Unterschiede im spezifischen Gewicht von metallischer und nichtmetallischer Phase zumeist äußerst gering und daher eine Zentrifugaltrennung besondere Arbeitsweisen erfordert.

Allen bisher entwickelten Verfahren zur Abtrennung der metallischen Phase von Leichtmetallen von mindestens einer dieselbe enthaltenden nichtmetallischen Phase ist der Nachteil gemeinsam, daß eine Trennung bzw. eine Entmetallisierung nicht in einem erforderlichen hohen Ausmaß erfolgt, so daß insbesondere die ökologischen Probleme mit hohen Deponiekosten und eine ökonomische Recyclierbarkeit der Rückstände weitgehend ungelöst bleiben.

Hier will die Erfindung Abhilfe schaffen und setzt sich zum Ziel, ein Verfahren zur Aufbereitung von feinen Mischungen aus Leichtmetall und zumindest einer nichtmetallischen Phase anzugeben, welches es gestattet, in einem nachfolgenden Entmetallisierungsprozeß einen hohen Trennungsgrad zu erreichen. Ferner ist es Aufgabe der Erfindung, eine Vorrichtung zu erstellen, mit welcher eine feine Mischung aus metallischen und nichtmetallischen Phasen für einen Folgeprozeß mit hohem Entmetallisierungsgrad vorbereitet werden kann.

Dieses Ziel wird bei einem Verfahren der eingangs genannten Art dadurch erreicht, daß die Mischung, Schlacke und/oder Krätze und gegebenenfalls Zusätze unter Bildung eines Einsatzes in ein Aufbereitungs- bzw. Vorbereitungsgefäß eingebracht wird(werden) und dem Einsatz mit an sich bekannten Mitteln Wärmeenergie zugeführt und dieser um höchstens 380 °C überhitzt, das heißt auf eine Temperatur, die zwischen der Schmelztemperatur der Metallphase und einer diese um 380 °C übersteigenden Temperatur liegt, gebracht und in diesem eine Temperaturverteilung mit geringen Unterschieden eingestellt werden und daß die Phasen des Einsatzes durch Bewegung dispergiert und/oder dispergiert gehalten werden, wonach der homogenisierte Einsatz mit den für ein Folgeverfahren eingestellten Parametern aus dem Aufbereitungs- bzw. Vorbereitungsgefäß in eine Desintegrationseinrichtung eingebracht und eine Abtrennung der metallischen Phase durchgeführt werden.
Die weitere Aufgabe der Erfindung wird bei einer gattungsgemäßen Einrichtung dadurch erreicht, daß das Aufbereitungs- bzw. Vorbereitungsgefäß im Aufnahmeraum für den Einsatz mindestens ein Mittel zur Bewegung, Umwälzung oder Mischung desselben aufweist und/oder durch Betriebsmittel selbst bewegbar ist.

Die mit der Erfindung erzielten Vorteils sind insbesondere darin zu sehen, daß das Phasengemisch für eine nachfolgende Desintegration derart aufbereitet wird, daß eine im wesentlichen vollkommene Entmetallisierung erfolgen kann. Dabei ist es möglich, Schlacken, Krätzen und dgl. von metallurgischen Prozessen wie Schmelz-, Umschmelz- oder Schmelzreinigungsverfahren stammend im warmen oder halbwarmen Zustand, also direkt vom Prozeß anfallend, einzusetzen, ohne daß wesentliche Metallmengen oxidieren oder mit Stickstoff reagieren. In den Einsatz im Aufbereitungsgefäß können auch weitere Zusätze wie Späne, Schleif- oder Feilstaub sowie feinstückiger, insbesondere mit nichtmetallischen Phasen vermischter Schrott eingebracht werden. Es ist wichtig, daß dem Einsatz Wärmeenergie zugeführt wird, wenn dies für den folgenden Desintegrationsprozeß erforderlich ist, wobei jedoch eine Überhitzung höchstens 380 °C betragen soll, weil sich höhere Temperaturen ungünstig auf die Mischungskonsistenz und das Verhalten der Metallphase auswirken. Um im gesamten Einsatz gleiche Bedingungen für eine Wechselwirkung Metall- Nichtmetallphase einzustellen, ist eine möglichst gleichmäßige Temperaturverteilung mit geringen Unterschieden nötig, um mittels einer vorgesehenen Bewegung die Phasen homogen dispergieren und/oder dispergiert halten zu können. Es hat sich entgegen dem Vorurteil der Fachwelt überraschend gezeigt, daß ein homogenisierter Einsatz, in welchem die Phasen dispergiert vorliegen, wesentlich besser, leichter und schneller desintegrierbar ist. Die Ursachen hiefür sind noch nicht restlos geklärt, jedoch wird angenommen, daß durch eine durch Stoß bewirkte Bewegung einerseits die Zwischenräume zwischen den nichtmetallischen Partikeln vergrößert werden, also eine innere Porosität des Einsatzes erhöht wird, und andererseits feinste Metallpartikel bei Überwindung der Grenzflächenspannung durch Spaltvergrößerung zu Tröpfchen koagulieren können, wodurch im homogenisierten Einsatz besonders vorteilhafte Bedingungen für eine nachfolgende, im wesentlichen vollständige Abtrennbarkeit der Metallphase geschaffen werden. Es kann vorteilhaft sein, wenn zur Bildung des Einsatzes Schrottsätze mit nichtmetallischen Beimengungen und/oder Zusatzstoffe, zum Beispiel Flußmittel, in das Aufbereitungsgefäß eingebracht werden und wenn dem Einsatz Wärmeenergie zugeführt wird. Dadurch ist es auf einfache Weise möglich, für ein nachgeschaltetes Desintegrationsverfahren besonders günstige Parameter im Einsatz einzustellen. Die Einbringung der Wärmeenergie kann dabei in an sich bekannter Weise durch Brenner oder durch Wärmestrahlung erfolgen. Dabei ist es jedoch bevorzugt, wenn der Einsatz auf eine Temperatur von mindestens 5°C, vorzugsweise in einem Bereich von 100 °C bis 200 °C, insbesondere von ca. 200 °C über der Schmelztemperatur der metallischen Phase eingestellt wird, weil bei diesen Temperaturen und bei einer gleichmäßigen Temperaturverteilung besonders gute Homogenisierungsbedingungen gegeben sind.

Wenn, wie weiters in günstiger Weise vorgesehen ist, der Einsatz bei höheren Temperaturen, insbesondere bei Temperaturen über der Schmelztemperatur der metallischen Phase, unter Schutzgas gehalten wird, so kann eine Bildung nichtmetallischer Komponenten wesentlich vermindert und das Metallausbringen beim nachfolgenden Desintegrationsverfahren erhöht werden.

Sowohl für ein Sammeln von Mischungen von mehreren Schmelzstellen als auch für eine wirtschaftliche Füllung von insbesondere unbeheizten Desintegrationseinrichtungen hat es sich als besonders vorteihaft herausgestellt, wenn der homogene Einsatz portionsweise dem Aufbereitungsgefäß entnehmbar ist.

Eine Vorrichtung der eingangs genannten Art zur Aufbereitung von aus Leichtmetall und zumindest einer nichtmetallischen Phase bestehenden Mischungen bei erhöhten Temperaturen, welche erfindungsgemäß dadurch gekennzeichnet ist, daß der Aufnahmeraum für den Einsatz mindestens ein Mittel zur Bewegung, Umwälzung oder Mischung desselben aufweist und/oder selbst durch einen Antrieb rotierend bewegbar ist, bringt den Vorteil mit sich, daß die damit erreichte Bewegungsart des Einsatzes diesen dispergiert und/oder dispergiert hält und weiters homogenisiert. Dabei wird offensichtlich, so wird angenommen, ein Lockern der nichtmetallischen Einzelteilchen und ein Sammeln der metallischen Partikel in den Zwischenräumen erreicht, wodurch eine darauffolgende Desintegration wesentlich vorteilhafter und effizienter durchführbar ist. Wenn der Einsatz dabei einer insbesondere durch Stöße induzierten Bewegung durch eine Rotation von Bewegungsmittel oder Aufbereitungsgefäß mit einer Drehzahl zwischen 5 und 40, insbesondere mit etwa 15, Umdrehungen je Minute unterworfen wird, werden, wie gefunden wurde, besonders günstige Bedingungen zur Einstellung homogenisierter Mischungen geschaffen. Besonders einfach und vorteilhaft dafür ist, wenn das Aufbereitungsgefäß um seine Längsachse drehbar und/oder um eine horizontale Achse kippbar ausgebildet und der Aufnahmeraum für den Einsatz zum Beispiel mittels Brenners beheizbar ist. Es ist jedoch auch möglich, den Einsatz durch Wärmestrahlung mittels beheizter Strahlflächen im Aufnahmeraum oder wegen seines hohen Metallgehaltes induktiv zu beheizen, was eine Koagulation der Metallphase zu Tröpfchen erleichtert. Die Gefäßwand dabei kann aus hitzebeständiger Legierung gebildet sein, für einen verbesserten Temperaturausgleich des Einsatzes ist jedoch eine Auskleidung bestehend im wesentlichen aus einem Oxid eines Leichtmetalles vorteilhaft. Insbesondere im Hinblick auf einen vorteilhaften Materialfluß bei einer homogenisierenden Aufbereitung von Mischungen für ein nachfolgendes Entmetallisieren hat es sich als günstig erwiesen, wenn das um seine Längsachse drehbare Vorbereitungsgefäß um ein im wesentlichen horizontales Kipplager in eine im wesentlichen vertikale Achsposition, in welcher die Öffung des Aufnahmeraumes nach oben weist, einstellbar ist und durch Hilfseinrichtungen beschickt wird, wonach im Einsatz bei im wesentlichen horizontaler Lage der Drehachse die für den Folgeprozeß erwünschten Stoff- und Temperaturparameter eingestellt werden, wonach die homogenisierte Mischung im wesentlichen nach unten ausgetragen und vorzugsweise direkt in eine Entmetallisierungsvorrichtung eingebracht wird. Eine derartige Aufbereitungseinrichtung hat die Vorteile einer kompakten Bauweise und eines ökonomischen Betriebes, weil umfangreiche Transportmittel nicht benötigt werden.

Anhand von lediglich einen Ausführungsweg darstellenden Zeichnungen wird die Erfindung näher erläutert.

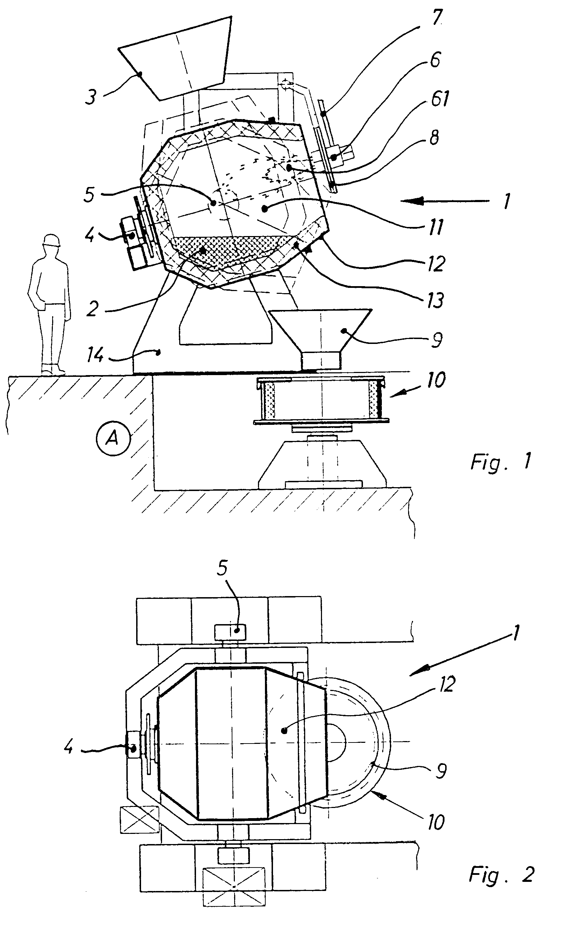

Es zeigen die Fig. 1 eine Aufbereitungsanlage 1 schematisch im Aufriß und Fig. 2 diese Anlage im Grundriß. In Fig. 1 ist ein Aufbereitungsgefäß 12 im Schnitt dargestellt und weist eine Ausmauerung 13 eines Aufnahmeraumes 11 für einen Einsatz 2 auf. Die Ausmauerung 13 kann dabei in Richtung zur Drehachse Vorsprünge haben oder es wird eine Rühreinrichtung ( nicht dargestellt) zur Bewegung des Einsatzes in den Aufnahmeraum 11 eingebracht. Mittels eines Lagers 4 ist das Gefäß 12 um seine Längsachse rotierbar, wobei durch einen Kippzapfen 5 das Gefäß 12 mit seiner Öffnung nach oben eingestellt ( strichliert dargestellt) und zum Beispiel durch einen Trichter 3 mit zum Beispiel Krätze beschickt werden kann. Der Kippzapfen 5 ist dabei auf einem Gestell 14 angeordnet, welches sich auf einem Fundament A abstützt. Vom Fundament A wird auch zum Beispiel eine Zentrifugiereinrichtung 10 zur Entmetallisierung der Mischung getragen, wobei durch eine Einleiteinrichtung 9 eine kontrollierte Einbringung erfolgen kann.
Mittels Versuchen wurde die Wirkung der erfindungsgemäßen Einrichtung bzw. der Aufbereitungsanlage erprobt:

### Versuch 1:

Verwendet wurde ein annähernd kugelförmiger, eine runde Eintrags- und Austragsöffnung aufweisender, dreh- und schwenkbarer Homogenisator mit einem inneren Durchmesser von 700 mm, der mit einer Ausmauerung bestehend aus 50 mm Isoliermasse und einer nach innen hin aufgebrachten Schicht aus 70 mm hochtonerdehältigem Feuerfestmaterial versehen war. Weiters waren in die Ausmauerung zwei Reihen von je 4 Hubelementen eingelassen, welche zueinander um den halben Abstand der Elemente in Bezug auf ihre Anordnung in Drehrichtung versetzt waren.
Eingesetzt wurden 40 kg Krätze einer Al/Mg/Si- Legierung mit einem Metallgehalt von etwa 70 %. Die Temperatur der Krätze beim Einsatz betrug 620+/-20 °C, die des Homogenisators etwa 800 °C. Mittels eines Erdgas/0₂- Brenners wurde die Temperatur auf 850 °C gesteigert, wobei durch das Drehen des Homogenisators eine einheitliche Zusammensetzung sowie Temperaturverteilung erreicht wurde. Die Dauer dieses Vorganges betrug 8 Minuten. Etwa nach zwei Drittel dieser Zeit wurde dem Einsatzgut 0,05 kg einer Salzmischung zugegeben. Die auf diese Weise behandelte bzw. aufbereitete Krätze wurde sodann aus der Homogenisierungsanlage ausgetragen und direkt in eine Vorrichtung zur Disintegration eingebracht und behandelt. Es ergab sich eine Metallausbringung von 94 %, wobei ein durch Zentrifugalabscheidung erhaltener Metallring eine Reinheit von 99,2 % ( Metallgehalt) aufwies. Gegenüber einem Vergleichsversuch ohne Aufbereitung der Krätze in einem Homogenisator ( bei nur statischer Vorbehandlung) war eine Steigerung einer Metallausbringung um 5 % und eine Erhöhung der Reinheit der Leichtmetallegierung von 97,7 % auf 99,2 % erreicht worden.

### Versuch 2:

Die experimentelle Anordnung sowie die Verfahrensweise entsprachen der Beschreibung in Versuch 1. Als Einsatzmaterial fanden 40 kg Krätze aus einem Schmelzprozeß für eine Magnesiumvorlegierung Verwendung. Da jedoch eine Forderung bestand, das erhaltene Leichtmetall bzw. die Leichtmetallegierung in einem Prozeß für Legierungen mit niedrigerem Magnesiumgehalt weiter zu verarbeiten, wurden 4 kg Reinstaluminiumspäne, welche als Abfallprodukt aus einem mechanischen Bearbeitungsprozeß angefallen sind, der Krätze zugesetzt und die Mischung aufbereitet. Anschließend daran wurde die so erhaltene Mischung aus dem Aufbereitungsgefäß ausgetragen und wiederum einer Desintegrationsvorrichtung zugeführt. Die Reinheit des erhaltenen Leichtmetalles war 99,4 %, die Metallausbringung betrug 95 %.

### Versuch 3:

Verwendet wurde ein annähernd birnenförmiger, dreh- und schwenkbarer Homogenisator mit einem größten inneren Durchmesser von 2000 mm und einer Länge von 2500 mm, der eine Ausmauerung bestehend aus 30 mm dicken Isolierplatten und einer nach innen hin aufgebrachten Schicht aus 170 mm hochtonerdehältigem Feuerfestmaterial aufwies. Weiters waren in die Ausmauerung vier Reihen von je 6 Hubelementen eingelassen, welche zueinander um je 1/3 des Abstandes der Elemente in Bezug auf ihre Anordnung in der Drehrichtung versetzt waren. Dadurch wurde eine äußerst effektive Durchmischung des eingesetzten Materials erreicht. Ohne die Verwendung der Hubelemente stellte sich eine nachteilig wirkende partielle Entmischung von metallischer Phase und Nichtmetallphase ein. Eingesetzt wurden 750 kg einer Krätze aus einem Schmelzprozeß für 99,7 %iges Aluminium mit einer Temperatur von 620+/-20 °C und einem Aluminiumgehalt von ca. 65 %. Unter Verwendung eines Erdgas/O₂ -Brenners wurde die Temperatur auf 860 °C gesteigert. Die Dauer dieses Verfahrensschrittes betrug 25 Minuten. Kurz vor dem Ausbringen des Einsatzes aus dem Aufbereitungsgefäß und der Einleitung in die Desintegrationsvorrichtung wurde 1,6 kg eines Flußmittels zugegeben. Die erreichte Metallausbringung betrug 97 %, was eine Steigerung von 9 % gegenüber einem Verfahren bei statischer Vorbehandlung bedeutet. Die Reinheit des erhaltenen Aluminiums betrug 99,3 %, bei statischer Vorbehandlung ergab sich ein Al-Gehalt von 98,4%.

## Patentansprüche

1. Verfahren zur Aufbereitung bzw. Vorbereitung von Mischungen bestehend aus mindestens einem Leichtmetall, insbesondere Aluminium, oder einer Legierung aus diesem(n) Metall(en) und zumindest einer nicht metallischen Phase, gebildet aus zumindest einem Oxid oder einer Oxidverbindung von diesem(n) Metall(en), gegebenenfalls einem oder mehreren weiteren Stoff(en), zum Beispiel Salz oder Salzmischungen, insbesondere aus bei Verfahren zur Erzeugung, Verarbeitung sowie Rückgewinnung von Aluminium und Aluminiumlegierungen anfallenden Schlacken oder Krätzen bei erhöhter Temperatur für ein anschließendes unabhängiges bzw. separates Verfahren zur Gewinnung bzw. Abtrennung der metallischen Phase von der nichtmetallischen Phase bei gegebenenfalls zumindest teilweiser Separierung der Bestandteile der nichtmetallischen Phase, **dadurch** **gekennzeichnet,** daß die Mischung, Schlacke und/oder Krätze und gegebenenfalls Zusätze unter Bildung eines Einsatzes in ein Aufbereitungs- bzw. Vorbereitungsgefäß eingebracht wird (werden) und dem Einsatz mit an sich bekannten Mitteln Wärmeenergie zugeführt und dieser um höchstens 380° C überhitzt, das heißt auf eine Temperatur, die zwischen der Schmelztemperatur der Metallphase und einer diese um 380°C übersteigenden Temperatur liegt, gebracht wird und in diesem eine Temperaturverteilung mit geringen Unterschieden eingestellt werden und daß die Phasen des Einsatzes durch Bewegung dispergiert und/oder dispergiert gehalten werden, wonach der homogenisierte Einsatz mit den für eine Folgeverfahren eingestellten Parametern aus dem Aufbereitungs- bzw. Vorbereitungsgefäß ausgetragen, in eine Desintegrationseinrichtung eingebracht und eine Abtrennung der metallischen Phase durch Beschleunigungskraft(kräfte) durchgeführt wird.

2. Verfahren nach Anspruch 1, **dadurch gekennzeichnet,** daß zur Bildung des Einsatzes teilweise feinstückiger, nichtmetallische Beimengungen aufweisender Schrott, insbesondere sand- oder staubförmiger Metallbearbeitungsabfall wie Schleifstaub oder Sandstrahlabtragungen und dgl., in das Aufbereitungsgefäß eingebracht wird.

3. Verfahren nach Anspruch 1 oder 2, **dadurch gekennzeichnet,** daß zur Bildung des Einsatzes nichtmetallische Zusatzstoffe, zum Beispiel Oxid oder Flußmittel, in das Aufbereitungsgefäß eingebracht werden.

4. Verfahren nach einem der Ansprüche 1 bis 3, **dadurch gekennzeichnet,** daß dem Einsatz in an sich bekannter Weise durch mindestens einen Brenner Wärmeenergie zugeführt wird.

5. Verfahren nach einem der Ansprüche 1 bis 3, **dadurch gekennzeichnet,** daß die Energiezufuhr zum Einsatz durch Strahlung mittels in das Aufbereitungsgefäß ragender Strahlkörper erfolgt.

6. Verfahren nach einem der Ansprüche 1 bis 5, **dadurch gekennzeichnet,** daß der Einsatz auf eine Temperatur von mindestens 5° C, vorzugsweise in einem Bereich von 100°C bis 250 °C, insbesondere von ca. 200 °C, über der Schmelztemperatur der metallischen Phase gebracht wird.

7. Verfahren nach einem der Ansprüche 1 bis 6, **dadurch gekennzeichnet,** daß bei der Homogenisierung im Einsatz eine im wesentlichen gleichmäßige Temperaturverteilung mit Unterschieden von höchstens 50°C, vorzugsweise höchstens 25°C, insbesondere unter 20°C, gebracht wird.

8. Verfahren nach einem der Ansprüche 1 bis 7, **dadurch gekennzeichnet,** daß der Einsatz in einem um seine Achse mit einer Drehzahl zwischen 5 und 40, vorzugsweise 10 bis 30, insbesondere ca. 15, Umdrehungen je Minute rotierenden Gefäß aufbereitet wird.

9. Verfahren nach einem der Ansprüche 1 bis 8, **dadurch gekennzeichnet,** daß der Einsatz bei höheren Temperaturen, insbesondere bei einer Temperatur über der Schmelztemperatur der metallsichen Phase unter Schutzgas gehalten wird.

10. Verfahren nach einem der Ansprüche 1 bis 9, **dadurch gekennzeichnet,** daß der aus den Einsatzstoffen gebildete Einsatz homogenisiert und danach insgesamt oder portionsweise in eine Desintegrationsvorrichtung eingebracht wird.

11. Verfahren nach einem der Ansprüche 1 bis 10, **dadurch gekennzeichnet,** daß der homogenisierte Einsatz in eine unbeheizte Desintegrationseinrichtung m it zumindest teilweise gekühlten Innenwänden eingebracht wird.

12. Vorrichtung (1) zur Aufbereitung bzw. Vorbereitung von Mischungen bestehend aus mindestens einem Leichtmetall, insbesondere Aluminium, oder einer Legierung aus diesem(n) Metall(en) und zumindest einer nichtmetallischen Phase, gebildet aus zumindest einem Oxid von diesem(n) Metall(en), gegebenenfalls einem oder mehreren weiteren Stoffen, zum Beispiel Salz oder Salzmischungen, insbesondere aus bei Verfahren zur Erzeugung, Verarbeitung sowie Rückgewinnung von Aluminium und Aluminiumlegierungen anfallenden Schlacken und Krätzen bei erhöhten Temperaturen für ein anschließendes Verfahren zur Gewinnung bzw. Abtrennung der metallischen Phase von der nichtmetallischen Phase bei zumindest teilweiser Separierung der Bestandteile der nichtmetallischen Phase, umfassend im wesentlichen ein Gefäß (12) mit mindestens einer Öffnung zum Einbringen der Mischung und/oder Schlacke sowie gegebenenfalls Zusatzstoffe und zum Austragen eines gebildeten homogenisierten Einsatzes (2), insbesondere zur Durchführung des Verfahrens nach den Ansprüchen 1 bis 11, **dadurch** **gekennzeichnet,** daß das Aufbereitungs- bzw. Vorbereitungsgefäß (12) im Aufnahmeraum (11) für den Einsatz (2) mindestens ein Mittel zur Bewegung, Umwälzung oder Mischung desselben aufweist und/oder durch Antriebsmittel (4) selbst bewegbar ist.

13. Vorrichtung nach Anspruch 12, **dadurch gekennzeichnet,** daß das Gefäß (12), wie an sich bekannt, um seine Längsachse drehbar und um eine horizontale Achse kippbar ausgebildet ist und daß dessen Aufnahmeraum (11) eine oder mehrere Öffnung(en) zur Einbringung von Einsatzstoffen und zum Austrag des homogenisierten Einsatzes (2) aufweist.

14. Vorrichtung nach Anspruch 12 oder 13, **dadurch gekennzeichnet,** daß der Aufnahmeraum (11) und/oder der Einsatz (2) beheizbar ist (sind).

15. Vorrichtung nach einem der Ansprüche 12 bis 14, **dadurch gekennzeichnet,** daß der Einsatz (2) mittels Brenners (6), gegebenenfalls mittels Plasmaflamme (61), beheizbar ist.

16. Vorrichtung nach einem der Ansprüche 12 bis 14, **dadurch gekennzeichnet,** daß der Einsatz (2) induktiv beheizbar ist.

17. Vorrichtung nach einem der Ansprüche 12 bis 14, **dadurch gekennzeichnet,** daß der Aufnahmeraum (11) und der Einsatz (2) durch Strahlung, zum Beispiel mittels Strahlungsheizelementen, beheizbar ist.

18. Vorrichtung nach einem der Ansprüche 12 bis 17, **dadurch gekennzeichnet,** daß diese Einrichtungen (7) zur Einleitung von Schutzgas in den Aufnahmeraum (11) und/oder Abdeckungen (8) zur Aufrechterhaltung einer Schutzgasatmosphäre im Aufnahmeraum (11) aufweisen.

19. Vorrichtung nach einem der Ansprüche 12 bis 18, **dadurch gekennzeichnet,** daß die mit dem Einsatz (2) zumindest teilweise in Berührung stehende Wand (13) des Aufbereitungs- bzw. Vorbereitungsgefäßes (12) aus einem hitzebeständigen Metall bzw. einer derartigen Legierung oder aus einer im wesentlichen aus Oxid von Leichtmetallen bestehenden Auskleidung (13) gebildet ist.

20. Vorrichtung nach einem der Ansprüche 12 bis 19 zur Durchführung des Verfahrens gemäß einem der Ansprüche 1 bis 11, **dadurch gekennzeichnet,** daß das Aufbereitungs- bzw. Vorbereitungsgefäß (12) um ein im wesentlichen horizontales Kipplager (5) in eine im wesentlichen vertikale Achsposition, in welcher die Öffnung des Aufnahmeraumes (11) nach oben weist, einstellbar ist, und durch Hilfseinrichtungen (3) Mischungen, Schlacken, Krätzen, Zusätze und dgl. unter Bildung eines Einsatzes (2) einbringbar sind und das Gefäß (12) zur Homogenisierung und/oder Beheizung des Einsatzes (2) in eine im wesentlichen horizontale Achsposition, um welche Achse das Gefäß (12) drehbar ist, eingestellt werden kann und für einen Austrag des homogenen Einsatzes (2) und einer mittels Zuführungseinrichtungen (9) bewerkstelligbaren Einbringung des Einsatzes (2) in eine vorzugsweise nicht heizbare Desintegrationseinrichtung (10) das Gefäß (12) in einer Lage positionierbar ist, in welcher die Rotationsachse schräg in Öffnungsrichtung des Gefäßes (12) nach unten verläuft.
